# EUROPEAN PATENT APPLICATION

(11) **EP 2 028 742 A1**
(43) Date of publication of application: **25.02.2009**
(21) Application number: 07016680.6
(22) Date of filing: 24.08.2007
(51) Int. Cl.: H02J 7/00

(54) **Method of monitoring voltage for energy storage device and apparatus using the method**

(71) Applicant: Nesscap. Co. Ltd., Kiheung-Gu Yongin Kyonggi do 449-901 (KR)
(72) Inventor: Kim, Sung Min, Gyeonggi-do (KR); Kim, Kwang Kyeom, Gyeonggi-do (KR)
(74) Representative: Liesegang, Eva

(57) **Abstract**

Disclosed herein is a voltage monitoring method and circuit for an electrical energy storage device. The voltage monitoring method includes detecting the voltages of one or more unit cells constituting the electrical energy storage device; generating logical signals depending on the respective levels of the detected voltages; and generating a detection signal indicating whether the unit cells are abnormal in response to the logical signals.

## Description

### BACKGROUND OF THE INVENTION

### 1. Field of the Invention

The present invention relates generally to an electrical energy storage device and, more particularly, to a voltage monitoring method and circuit for an electrical energy storage device.

### 2. Description of the Related Art

When a plurality of unit cells is connected in series, there is a concern that some of the unit cells will be excessively charged or excessively discharged if irregularities exist in the characteristics of each unit cell. In order to avoid such states, monitoring of the voltage of each unit cell is conducted, and a voltage monitoring device is provided for such monitoring.

When electrical energy storage means, such as secondary batteries or ultra capacitors, are connected in series to thus constitute an electrical energy storage device, all of the unit cells of the respective secondary batteries or ultra capacitors must operate within an allowed operating voltage range. For this purpose, various voltage equalization methods are used. Detecting whether voltage equalization is maintained is important for preventing failure. Accordingly, a method of monitoring the voltages of respective unit cells is used in addition to a voltage equalization circuit. When the number of series connections is small, it is not difficult to continuously measure all of the voltages of the respective unit cells. In contrast, when the number of series connections is large, it is very complicated to connect voltage detection lines to the unit cells constituting an electrical energy storage device, and to then connect the voltage detection lines to an external voltage monitoring circuit in order to monitor all of the voltages of the respective unit cells of the electrical energy storage device. In order to cope with such complexity, a method of internally installing a communication circuit and transmitting the voltages of respective unit cells outside an electrical energy storage device in a time-division manner is also used. From the point of view of a user who is using such an electrical energy storage device, there is a difficulty in that the user must use a complicated device in order to determine whether the electrical energy storage device is normal.

Generally, when an abnormality occurs in an electrical energy storage device having secondary batteries or ultra capacitors that are connected in series, the abnormality can usually be determined through voltage detection. All factors, such as an increase in the resistance of a specific unit cell, a decrease in the capacity of a specific unit cell, and an increase in the leakage current of a specific unit cell, allow determination of whether an abnormality has occurred to be made through voltage detection. Particularly, in a series connection, failure in a specific unit cell ultimately results in failure in the entire electrical energy storage device, and therefore it is important to monitor whether unit cells in which failure has occurred exist.

### SUMMARY OF THE INVENTION

Accordingly, the present invention has been made keeping in mind the above problems occurring in the prior art, and an object of the present invention is to provide a voltage monitoring method for an electrical energy storage device, which can detect whether an abnormality has occurred by detecting the voltages of one or more unit cells.

Another object of the present invention is to provide a voltage monitoring circuit for an electrical energy storage device, which can detect whether an abnormality has occurred by detecting the voltages of one or more unit cells.

In order to accomplish the above objects, the present invention provides a voltage monitoring method for an electrical energy storage device, including detecting the voltages of one or more unit cells constituting the electrical energy storage device; generating logical signals depending on the respective levels of the detected voltages; and generating a detection signal indicating whether the unit cells are abnormal in response to the logical signals.

The detecting the voltages of the unit cells is performed using one or more switching elements that are turned on/off at a predetermined voltage.

The generating the logical signals may include activating one or more light-emitting elements only when the levels of the detected voltages fall within a set operating voltage range; and outputting the logical signals by activating one or more light-receiving elements in response to the outputs of the light-emitting elements.

The generating the logical signals may include inactivating one or more light-emitting elements only when the levels of the detected voltages fall within a set operating voltage range; and outputting the logical signals by activating one or more light-receiving elements in response to the outputs of the light-emitting elements.

The light-emitting elements and the light-receiving elements may be electrically isolated from each other. The generating the logical signals may include outputting the logical signals using one or more opto-couplers.

The generating the detection signals may include receiving the logical signals and performing an AND operation, through which a logic high signal is output only when all of the unit cells are normal.

In addition, the present invention provides a voltage monitoring circuit for an electrical energy storage device, including one or more unit cells constituting the electrical energy storage device; one or more voltage detection units for detecting the respective voltages of the unit cells using one or more switching elements that are turned on/off at a predetermined voltage; one or more unit circuits for generating respective logical signals depending on the levels of voltages detected by the voltage detection units; and a logical operation unit for performing logical operation on the logical signals and generating a detection signal indicating whether the unit cells are abnormal.

The unit circuits may include one or more light-emitting elements activated only when the voltages detected by the voltage detection unit fall within a set operating voltage range; and one or more light-receiving elements, electrically isolated from the light-emitting elements and configured to output the logical signals in response to the respective outputs of the light-emitting elements.

The unit circuits may include one or more light-emitting elements activated only when the voltages detected by the voltage detection units fall within a set operating voltage range; and one or more light-receiving elements electrically isolated from the light-emitting elements and configured to output the logical signals in response to the respective outputs of the light-emitting elements.

The unit circuits may include one or more opto-couplers.

The logical operation unit may include an AND gate that receives the logical signals and outputs a logic high signal only when all of the unit cells are normal.

The voltage detection units may be arranged on one side of a printed circuit board, and the unit circuits and the logical operation unit may be arranged on the remaining side of the printed circuit board.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a circuit diagram showing a circuit for detecting whether an abnormality has occurred in a single unit cell constituting an electrical energy storage device, according to an embodiment of the present invention; and
FIG. 2 is a circuit diagram showing a circuit for detecting whether an abnormality has occurred in four unit cells constituting an electrical energy storage device, according to another embodiment of the present invention.

### DESCRIPTION OF THE PREFERRED EMBODIMENTS

For embodiments of the present invention, which are disclosed in the present specification, specific structural and functional descriptions are provided only for the purpose of describing the embodiments of the present invention. The present invention may be implemented in various forms, and should not be construed as being limited to the embodiments described in the present specification.

Since the present invention may be modified in various ways and may have various forms, specific embodiments are illustrated in the drawings and are described in detail in the present specification. However, it should be understood that the present invention are not limited to specific disclosed embodiments, but include all modifications, equivalents and substitutes included within the spirit and technical scope of the present invention. In the description of each drawing, the same reference characters are used to designate the same or similar components.

The terms 'first,' 'second,' etc. may be used to describe various components, but the components are not limited by such terms. The terms are used only for the purpose of distinguishing one component from other components. For example, a first component may be designated as a second component without departing from the scope of the present invention. In the same manner, the second component may be designated as the first component.

When an arbitrary component is described as "being connected to" or "being linked to" another component, this should be understood to mean that still another component may exist between them, although the arbitrary component may be directly connected to, or linked to, the second component. In contrast, when an arbitrary component is described as "being directly connected to" or "being directly linked to" another component, this should be understood to mean that no component exists between them. Other expressions for describing the relationships between components, that is, the expressions "between" and "immediately between," or "neighboring" and "directly neighboring," should also be understood in the same manner.

The terms used in the present application are used to describe only specific embodiments, and are not intended to limit the present invention. A singular expression includes a plural expression as long as it does not have an apparently different meaning in context. In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

Unless otherwise specified, all of the terms which are used herein, including the technical or scientific terms, have the same meanings as those that are generally understood by a person having ordinary knowledge in the art to which the present invention pertains. The terms defined in a generally used dictionary must be understood to have meanings identical to those used in the context of a related art, and are not to be construed to have ideal or excessively formal meanings unless they are obviously specified in the present application.

Preferred embodiments of the present invention are described in detail with reference to the accompanying drawings. The same reference characters are used for the same components, and repeated description of similar components is omitted.

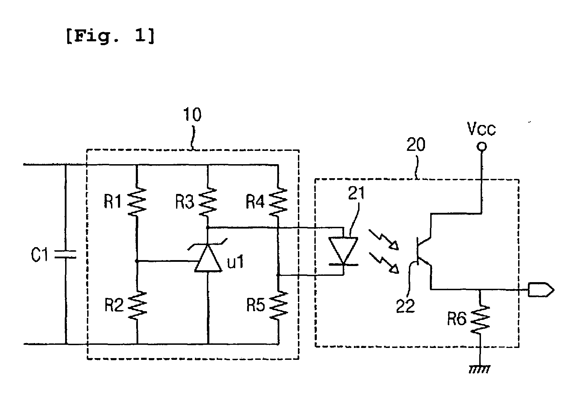

FIG. 1 is a circuit diagram showing a circuit for detecting whether an abnormality has occurred in a single unit cell constituting an electrical energy storage device according to an embodiment of the present invention. The circuit is a circuit for detecting whether an abnormality has occurred by detecting the voltage of a single unit cell C1 constituting an electrical energy storage device.

Referring to FIG. 1, the voltage monitoring circuit for the electrical energy storage device may include a unit cell C1, a voltage detection unit 10, and a unit circuit 20.

Although the unit cell C1 has been shown as being composed of a single capacitor, this is only an embodiment of the present invention, and it is apparent to those skilled in the art that batteries, such as Lithium and Lithium Ion secondary battery cells, an ultra capacitor, and the like are all relevant.

The voltage detection unit 10 may include resistors R1, R2, R3, R4 and R5 and a switching element U1. The switching element U1 may be implemented using a switching element, such as a Zener diode or a shunt resistor, that performs On/Off operations in response to a specific voltage. In the embodiment of the present invention, the switching element U1 is implemented using a programmable voltage reference. Generally, the reverse breakdown voltage of a Zener diode is set to a specific voltage at the time of manufacturing the element, so that the Zener diode is used to generate reference voltage (constant voltage). The typical Zener diode has a fixed breakdown voltage value, as described above, whereas the programmable voltage reference U1 can program an output voltage depending on variation in reference input voltage.

The unit circuit 20 may include a light-emitting element 21, a light-receiving element 22, and a resistor R6. The light-emitting element 21 is an element that converts an electrical signal into an optical signal, and may be implemented using a Light-Emitting Diode (LED). The light-receiving element 22 is an element that converts an optical signal into an electrical signal, and may be implemented using a photodiode or a phototransistor.

In the present embodiment, the light-emitting element 21 and the light-receiving element 22 are implemented as a single element using an opto-coupler. The opto-coupler functions to transmit an input electrical signal and an output electrical signal in light form. Generally, an optical coupling element, in which a light-emitting element and a light-receiving element are coupled in a single package and the input and the output are electrically insulated, thus realizing signal transmission using light, is also called a photo coupler. The opto-coupler is completely electrically insulated and is used for signal transmission between two circuits having difference voltage potentials. The opto-coupler is advantageous in that the input is not affected by the output because signal transmission is unilaterally performed, interfacing with logical elements can be easily performed, and the response speed is fast. Furthermore, the opto-coupler is advantageous in that it can increase the packaging density due to its small size and light weight, has a semipermanent life span, and has high reliability. Furthermore, the opto-coupler has strong ability to resist noise because it transmits signals using light. Generally, the opto-coupler is an element that is configured by interposing a high insulation material between a light-emitting element and a light-receiving element and optically coupling the two elements and is then used as a signal interface between circuits having different ground potentials, and that can replace an isolation transformer or an electronic relay. The opto-coupler transmits signals in a state in which an LED 21 is disposed on one side thereof and a phototransistor is disposed on the other side thereof, thus realizing electrical insulation.

An operation of detecting the voltage of the unit cell C1 and determining whether an abnormality has occurred is described in detail below.

The upper and lower limits of the operating voltage of the unit cell C1 can be set using the ratio between the resistors R1, R2, R4 and R5. The voltage of the unit cell C1 is divided using the resistors R1 and R2. Of voltages obtained through the division, the voltage across both terminals of the resistors R2 is used as the reference input voltage of the programmable voltage reference U1. As the voltage of the unit cell C1 increases or decreases, the voltage of the resistor R2, that is, the reference input voltage of the programmable voltage reference U1, increases or decreases linearly.

The resistors R4 and R5 divide the voltage of the unit cell C1, and the LED 21 is turned on/off depending on the difference in voltage between the programmable voltage reference U1 and the resistor R5, which are connected between the two terminals of the LED 21. That is, the LED 21 is turned on when the voltage of the unit cell C1 falls within a set operating voltage range, whereas the LED 21 is turned off when the voltage of the unit cell C1 does not fall within the set range. In this case, the construction may be made such that the On/Off operation of the LED 21 is performed in reverse, which will be apparent to those skilled in the art.

When the LED 21 is turned on, current flows through the phototransistor 22. In contrast, when the LED 21 is turned off, no current flows through the phototransistor 22. That is, the phototransistor 22 outputs a logic high signal or a logic low signal, which is used for logical operations, according to the On/Off of the LED 21. When the voltage of the unit cell C1 falls within the operating voltage range, the LED 21 is turned on, and thus the phototransistor 22 outputs a logic high signal. When the voltage of the unit cell C1 does not fall within the operating voltage range, the LED 21 is turned off, and thus the phototransistor 22 outputs a logic low signal. The output logic signals are input to a logical operation unit, which will be described later.

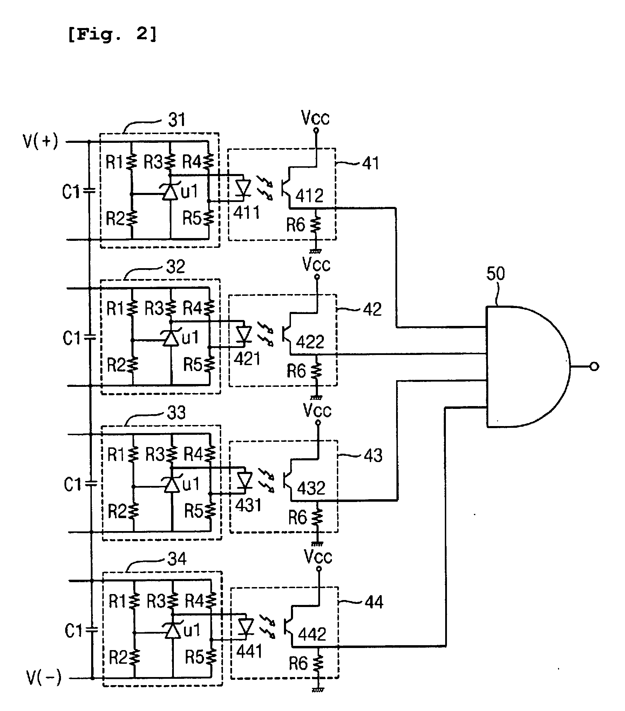

FIG. 2 is a circuit diagram showing a circuit for detecting whether an abnormality has occurred in four unit cells constituting an electrical energy storage device according to another embodiment of the present invention.

Referring to FIG. 2, the voltage monitoring circuit for the electrical energy storage device may include unit cells C1, C2, C3 and C4, voltage detection units 31, 32, 33 and 34, unit circuits 41, 42, 43 and 44, and a logical operation unit 50.

The unit cells C1, C2, C3 and C4 are connected in series to thus constitute an electrical energy storage device.

The voltage detection units 31, 32, 33 and 34 are connected to the respective unit cells C1, C2, C3 and C4), and detect the voltages of the respective unit cells C1, C2, C3 and C4. The operations of the respective voltage detection units 31, 32, 33 and 34 are the same as described in FIG. 1.

The unit circuits 41, 42, 43 and 44 are connected to the respective voltage detection units 31, 32, 33 and 34, and generate logic signals depending on respective voltage levels detected from the voltage detection units 31, 32, 33 and 34.

The logical operation unit 50 may an AND gate 50. The AND gate 50 performs an AND operation on the logical values of the respective output voltages of the unit circuits 41, 42, 43 and 44. When all of the respective output voltages of the unit circuits 41, 42, 43 and 44 have a logic high value, that is, only when all of the unit cells C1, C2, C3 and C4 are normal, a logic high signal is output from the logical operation unit 50. Furthermore, when any of the respective output voltages of the unit circuits 41, 42, 43 and 44 has a logic low value, that is, when any of the unit cells C1, C2, C3 and C4 is abnormal, a logic low signal is output from the logical operation unit 50. Accordingly, whether the entire electrical energy storage device is abnormal can be determined using the output signal of the logical operation unit 50. Although, in the present embodiment, the AND operation has been described as being performed using a single AND gate, the present invention is not limited thereto. It will be apparent to those skilled in the art that the AND operation may be modified in various ways.

When power is supplied from the outside of the electrical energy storage device to the logical operation unit 50, the operation can be performed using three lines, that is, a (+) □power source line, a (-) power source line and a signal line. In this case, the power source of the electrical energy storage device itself is used for the voltage detection unit, so that the power source of the electrical energy storage device itself, rather than an external power source, can be used for the logical operation unit 50. However, in the present embodiment, the voltage detection units 31, 32, 33 and 34 and the logical operation unit 50 are electrically insulated, and the failure of the logical operation unit 50 does not spread to cause failure with the electrical energy storage device, so it is advantageous to use an external source for the logical operation unit 50, which is the same as described above.

The voltage detection units 31, 32, 33 and 34 may be arranged on one side of a printed circuit board, and the unit circuits 41, 42, 43 and 44 and the logical operation unit 50 may be arranged on the other side of the printed circuit board.

In particular, as the number of series connections increases, that is, as the voltage of the electrical energy storage device increases, electrical insulation becomes important and difficult to attain. When the number of series connections of the electrical energy storage device increases, the voltage monitoring circuit includes a number of voltage detection units and a number of unit circuits corresponding to the number of unit cells, and a single logical operation unit for performing a logical operation on the outputs of the respective unit circuits. Accordingly, whether the entire electrical energy storage device is abnormal can be determined by monitoring only the output signal of the logical operation unit.

When the voltage monitoring method and circuit for an electrical energy storage device according to the present embodiment are used, whether the electrical energy storage device is abnormal can be determined using a simple circuit based on an optical method, in which one or more opto-couplers are used, instead of a complicated device.

As described above, the voltage monitoring methods according to the embodiments of the present invention monitor whether one or more unit cells of the electrical energy storage device operate in the set voltage range and provide notification of whether the corresponding system is abnormal when the voltage value of each unit cell is greater than the upper limit or smaller than the lower limit, thus preventing damage to equipment.

As described above, the voltage monitoring circuits according to the embodiments of the present invention monitor whether one or more unit cells of the electrical energy storage device operate in the set voltage range and provide notification of whether the corresponding system is abnormal when the voltage value of each unit cell is greater than the upper limit or smaller than the lower limit, thus preventing damage to equipment.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A voltage monitoring method for an electrical energy storage device, comprising:
detecting voltages of one or more unit cells constituting the electrical energy storage device;
generating logical signals depending on respective levels of the detected voltages; and
generating a detection signal indicating whether the unit cells are abnormal in response to the logical signals.

2. The voltage monitoring method as set forth in claim 1, wherein the detecting the voltages of the unit cells is performed using one or more switching elements that are turned on/off at a predetermined voltage.

3. The voltage monitoring method as set forth in claim 1, wherein the generating the logical signals comprises:
activating one or more light-emitting elements only when levels of the detected voltages fall within a set operating voltage range; and
outputting the logical signals by activating one or more light-receiving elements in response to outputs of the light-emitting elements.

4. The voltage monitoring method as set forth in claim 1, wherein the generating the logical signals comprises:
inactivating one or more light-emitting elements only when levels of the detected voltages fall within a set operating voltage range; and
outputting the logical signals by activating one or more light-receiving elements in response to outputs of the light-emitting elements.

5. The voltage monitoring method as set forth in claim any one of 3 and 4, wherein the light-emitting elements and the light-receiving elements are electrically isolated from each other.

6. The voltage monitoring method as set forth in claim any one of 3 and 4, wherein the generating the logical signals comprises outputting the logical signals using one or more opto-couplers.

7. The voltage monitoring method as set forth in claim 1, wherein the generating the detection signals comprises receiving the logical signals and performing an AND operation, through which a logic high signal is output only when all of the unit cells are normal.

8. A voltage monitoring circuit for an electrical energy storage device, comprising:
one or more unit cells constituting the electrical energy storage device;
one or more voltage detection units for detecting respective voltages of the unit cells using one or more switching elements that are turned on/off at a predetermined voltage;
one or more unit circuits for generating respective logical signals depending on levels of voltages detected by the voltage detection units; and
a logical operation unit for performing logical operation on the logical signals and generating a detection signal indicating whether the unit cells are abnormal.

9. The voltage monitoring circuit as set forth in claim 8, wherein the unit circuits comprise:
one or more light-emitting elements activated only when the voltages detected by the voltage detection unit fall within a set operating voltage range; and
one or more light-receiving elements, electrically isolated from the light-emitting elements and configured to output the logical signals in response to respective outputs of the light-emitting elements.

10. The voltage monitoring circuit as set forth in claim 8, wherein the unit circuits comprises:
one or more light-emitting elements activated only when the voltages detected by the voltage detection units fall within a set operating voltage range; and
one or more light-receiving elements electrically isolated from the light-emitting elements and configured to output the logical signals in response to respective outputs of the light-emitting elements.

11. The voltage monitoring circuit as set forth in claim 8, wherein the unit circuits comprise one or more opto-couplers.

12. The voltage monitoring circuit as set forth in claim 8, wherein the logical operation unit comprises an AND gate that receives the logical signals and outputs a logic high signal only when all of the unit cells are normal.

13. The voltage monitoring circuit as set forth in claim 8, wherein the voltage detection units are arranged on one side of a printed circuit board, and the unit circuits and the logical operation unit are arranged on a remaining side of the printed circuit board.
